Europäisches Patentamt

European Patent Office

Office européen des brevets

(19)

(11) Publication number: **0 388 167**
**A1**

# EUROPEAN PATENT APPLICATION

(12)

(21) Application number: **90302697.9**

(22) Date of filing: **14.03.90**

(51) Int. Cl.5: **C04B 41/45, //C04B41/51, C22C1/09**

(30) Priority: **14.03.89 JP 59577/89**

(43) Date of publication of application:
**19.09.90 Bulletin 90/38**

(84) Designated Contracting States:
**DE FR GB IT**

(71) Applicant: **UBE INDUSTRIES, LTD.**
**32-12, Nishihonmachi 1-chome**
**Ube-shi Yamaguchi-ken 755(JP)**

(72) Inventor: **Ohsora, Yasumasa**
**Kushi, Konan-ku**
**Ube-shi, Yamaguchi-ken(JP)**
Inventor: **Shimizu, Kaxutoshi**
**968, Kagaw**
**Yamaguchi-shi, Yamaguchi-ken(JP)**
Inventor: **Tokuse, Masahiro**
**2-4-8, Minamiobayama-cho**
**Ube-shi, Yamaguchi-ken(JP)**

(74) Representative: **Myerscough, Philip Boyd et al**
**J.A.Kemp & Co. 14, South Square Gray's Inn**
**London, WC1R 5EU(GB)**

(54) Hybrid fibers and process for producing the same, and fiber-reinforced metals reinforced therewith.

(57) In the preparation of hybrid fibers comprising a bundle of heat-resistant inorganic filaments and heat-resistant in organic filler in the form a short fiber, whisker or powder, a coupling agent in applied to at least one of the bundle and filler to improve the mechanical strength of fiber-reinforced metals (FRM) produced employing the hybrid fibers.

EP 0 388 167 A1

# HYBRID FIBERS AND PROCESS FOR PRODUCING THE SAME, AND FIBER-REINFORCED METALS REINFORCED THEREWITH

This invention relates to hybrid fibers for use in the manufacture of fiber-reinforced metals (FRM) and the like, processes for producing the hybrid fibers, and FRM reinforced with the hybrid fibers.

In recent years, FRM was developed in which alumina fibers, silica fibers, silicon carbide fibers, boron fibers, silicon nitride fibers and carbon fibers are used as reinforcing fibers and aluminum, magnesium, titanium and copper, as a matrix metal. These FRM products are finding applications in many industrial fields as, for example, machine component parts and structural materials.

FRM is expected to show mechanical properties in accordance with the rule of mixture. Actually, however, products having the expected mechanical properties have not been obtained because of the cohesion of the reinforcing fibers with one another and the non-uniform distribution of the reinforcing fibers in the matrix.

As one solution to these problems, JP-A 57-74117 (1982) and JP-A 62-27142 (1987) disclose processes for continuous production of a fiber-reinforced composite, which comprises a first step of uniformly spreading a bundle of continuous filaments wound up on a roll and aligning the fiber bundle under a suitable tension on a base stand such as a roll, a second step of plasma-spraying a matrix material onto the fiber bundle on the base stand to produce prepreg sheets, a third step of stacking the required number of the prepreg sheets and heating them, or heating the prepreg sheets and then stacking the required number of the prepreg sheets, and a fourth step of continuously pressing the stacked prepreg sheets by a roller. In this process, spreading of the filament bundle on a base stand such as a rotating drum is effected by blowing compressed air against the filament bundle advancing toward the base stand. Accordingly, troubles such as the entanglement of the filaments with one another and their breakage are liable to occur, and to avoid these troubles, it is necessary to properly select the operating conditions such as the take-up speed of the filaments, the tension applied to the filaments, and the flow rate of compressed air. Furthermore, since this process combines the matrix metal and the reinforcing filament by plasma spraying, it does not offer a solution to the problems associated with other combining means such as a high-pressure coagulation casting method.

As the solution to the above problems that can be applied to the preparation of FRM by a plasma jet method as well as a high-pressure coagulation casting method, JP-A 61-266666 (1986) discloses a composite fibrous reinforcing material for FRM, called a "hybrid fiber", and a process for the preparation of same, and JP-A 61-295346 (1986) discloses FRM using the hybrid fiber as a reinforcement. JP-A 63-59473 (1988) discloses an improvement in the process of JP-A 61-266666.

The hybrid fiber disclosed in the above three Japanese patent publications comprises a bundle of filaments of a heat-resistant material and a heat-resistant inorgnaic filler in the form of a short fiber, a whisker or a powder supported on the surface of each filament.

The term "hybrid fiber" here referred to means a fibrous reinforcing material of the aforesaid structure.

If the hybrid fiber disclosed in JP-A 61-266666 (1986) is used as a fibrous reinforcement for FRM, the cohesion between filaments can be avoided and uniform dispersion in FRM is achieved, but the improvement in mechanical strength of the resulting FRM is not so great as would be expected. This is thought attributable to still insufficient distribution and diffusion of the reinforcing fibers in FRM. In fact, when the cross-section of the resulting FRM is observed by a microscope, a portion free from the reinforcing fibers is observed in the matrix phase (a phenomenon of causing formation of the portion free from the reinforcing fibers in the FRM matrix phase is hereinafter called "channeling".) Moreover, there are problems in operation that when this process is continuously performed, the filaments are broken and consequently the bundle of the continuous filaments becomes fluffy and the hybrid fibers can hardly be unwound at times from the take-up bobbin owing to entanglement betweem filaments of bundles. There is another problem that filler particles not adhered firmly enough to the surface of the filaments are scattered in the ambient atmosphere to contaminate the working environment.

Our copending application USSN 07-295,521 proposes one solution to these problems, and the improved process is characterized in that a lubricant such as paraffin waxes, etc. is applied to one or both of filaments and filler.

JP-A 61-91341 (1986) discloses a fiber-reinforced metal composite in which the matrix metal contains inorganic long fibers and at least one material selected from inorganic whiskers, metal whiskers and inorganic short fibers. Incorporation of inorganic whiskers, metal whiskers and short fibers in said invention however aims only to increase the mechanical strength of FRM in a perpendicular direction to the orientation direction of long fibers, and does not refer at all to the improvement in mechanical strength in the orientation direction of long fibers. It rather states that FRM imparts the mechanical strength in accordance with the rule of mixture in the orientation direction of fibers.

## SUMMARY OF THE INVENTION

It is an object of this invention to provide a hybrid fiber which gives a FRM product showing mechanical strength approximately in accordance with the rule of mixture when used in preparation of FRM.

Another object of this invention is to provide a novel process for preparing a hybrid fiber which is free from the aforesaid drawbacks associated with the prior art.

Still another object of this invention is to provide FRM showing mechanical strength approximately in accordance with the rule of mixture.

This invention can achieve these objects by treating at least one of a bundle of heat-resistant inorganic filaments and a heat-resistant inorganic filler constituting the hybrid fiber with a coupling agent used in reinforcing glass fibers to produce FRP, for example.

## BRIEF DESCRIPTION OF THE ACCOMPANYING DRAWINGS

Figure 1 is a schematic diagram of an apparatus for the preparation of the hybrid fibers in accordance with the present invention;

Figure 2 is a schematic diagram of another apparatus for the preparation of the hybrid fibers in accordance with the present invention;

Figure 3 is perspective view of a casting die or a fiber retaining jig for use in the production of FRM in accordance with the present invention in a high-pressure casting method;

Figure 4 is a sectional view of a high-pressure casting apparatus suitable for the production of FRM using the hybrid fibers in accordance with the present invention;

Figure 5 is a sectional view of the apparatus shown in Figure 4, in pressurizing stage; and

Figures 6 to 8 are micrographs of the FRM's obtained in EXMAPLE 3, EXAMPLE 4 and COMPARATIVE EXAMPLE 2, respectively, in cross-section perpendicular to the orientation direction of filaments.

## DETAILED DESCRIPTION OF THE INVENTION

The hybrid fibers in accordance with this invention are prepared by employing an apparatus taught, for example, in JP-A 61-266666 (1986) mentioned above.

The present invention will be described in detail with reference to the accompanying drawings.

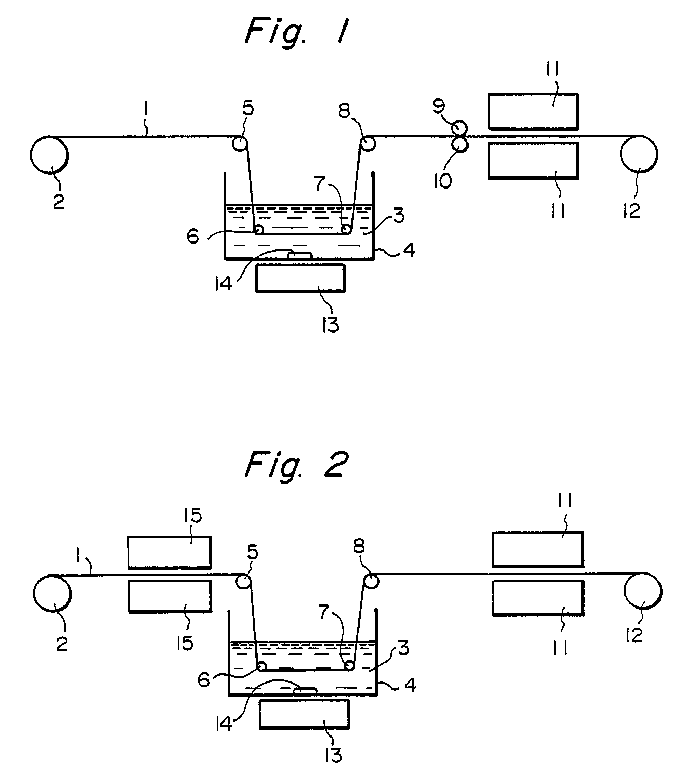

With reference to Figure 1, a bundle 1 of filaments is unwound from a bobbin 2 and passed through a bath 4 holding a suspension of a filler while being conducted by pulleys 5, 6, 7 and 8. During this time, the filler adheres to the surface of the filaments constituting the bundle 1. The bundle 1 is then squeezed by squeeze rolls 9 and 10 to remove the liquid contained in the bundle, and then dried in a dryer 11. The dried bundle is wound up on a bobbin 12. We have found that when this operation is continued, the filler adheres to the circumferential surfaces of the pulleys 6, 7 and 8 and the squeeze rolls 9 and 10 and becomes solidified, and that the solidified filler comes into frictional contact with the filaments or applies a force to the filaments diametrically thereof to cause snap or break of the filament and, consequently, napping of the bundle of inorganic filaments.

Now, according to the present invention, the uniform distribution of the reinforcing inorganic fibers in FRM products is achieved and the generation of napping on the surface of the bundle of inorganic filaments can be avoided by previous application of a coupling agent to the surface of at least one of the filaments and the filler, or by addition of a couping agent to the treating bath 4 containing dispersed therein the filler for application of the coupling agent to the surface of the filaments and the filler.

Examples of fibers which constitute the bundle of filaments include silicon carbide fibers, silicon nitride fibers, boron nitride fibers, aluminum nitride fibers, silica fibers, boron fibers, alumina fibers, carbon fibers, and inorganic fibers of Si-Ti (or Zr)-C-O type (TYRANNO FIBER, a registered trademark for a product of Ube Industries, Ltd.) obtained by calcining polymetallocarbosilane. These fibers may be used singly or in combination.

The heat-resistant filler is composed of metals, carbon or ceramics. The metals may be, for example, Al, Ti, Cu, Ni, Co, Zr, Si, Cr, Zn, W and Mo, and the ceramics may be, for example, carbides, nitrides, borides and oxides.

Powders, short fibers or whiskers of these metals or ceramics may be used singly or in combination as the filler.

The length, diameter and shape of the short fibers and whiskers and the particle diameter of the powders may be selected by considering the combination of the filaments with the filler. Desirably, the short fibers and whiskers have an average diameter 1/3000 to 1/5 of that of the filaments and an aspect ratio of from 50 to 1000. The fine particles desirably have an average diameter 1/5000 to 1/2 of that of the filaments.

There is no particular restriction on the concentration of the filler in the suspension, and may generally be about 0.3 to 300 % by weight, preferably 0.3 to 30 % by weight.

It is advisable that the amount of the filler adhered to the continuous inorganic filaments is 0.5 to 80 parts by weight per 100 parts by weight of the continuous inorganic filaments.

The coupling agent used in this invention may be any coupling agent used to produce e.g. glass fiber reinforced plastics for strenghening the coupling between the organic material and the inorganic material. Examples of the coupling agent are silane coupling agents such as $\gamma$-aminopropylethoxysilane, N-phenyl-$\gamma$-aminopropyl-trimethoxysilane and N-$\beta$(aminoethyl)$\gamma$-aminopropyltrimethoxysilane, and titanium-type coupling agents such as tristearatotitanium isopropylate [(i-CH$_3$H$_7$O)Ti(OCOC$_{17}$H$_{35}$)$_3$].

It is advisable that the amount of the coupling agent adhered to the continuous inorganic filaments and the filler constituting the hybrid fibers is 0.05 to 10 parts by weight per 100 parts by weight in total of the continuous inorganic filaments and the filler adhered thereto. Whether the amount of the coupling agent is less than 0.05 part by weight or more than 10 parts by weight, the desirous objects cannot be achieved, making it impossible to provide uniform FRM.

It is desirous that the concentration of the coupling agent in the suspension 3 is within the range of 0.01 to 10 % by weight.

Whether the concentration of the coupling agent is less than 0.01 % by weight or more than 10 % by weight, the desirous objects cannot be acieved, making it impossible to provide uniform FRM.

Concrete examples of the medium in which the filler is suspended and the coupling agent is dissolved are alcohols such as methanol and ethanol and aromatic hydrocarbons such as benzene, toluene and xylene.

The coupling agent may be used in combination with a binder, a plasticizer and a lubricant.

For example, it is advisable that the binder is dissolved in the suspension 3 to expedite the adhesion of the filler to the inorganic filaments. Examples of the binder are polyethylene oxide and ethyl cellulose. The suitable concentration of the binder in the suspension is 0.1 to 0.5 % by weight.

Examples of the lubricant are natural parafins, micro waxes, synthetic parafin waxes, polyethylene wax, fluorocarbon oil, higher aliphatic acids, higher hydroxy aliphatic acids, lower alcohol esters, Hoechst waxes, natural waxes and higher aliphatic alcohols. When the lubricant is used in combination with the coupling agent, its suitable concentration in the suspension is 0.5 to 50 % by weight.

A method of soaking the bundle 1 of the continuous inorganic filaments in the suspension 3 of the filler containing the coupling agent dissolved therein is not limited in particular. A method of continuously soaking the bundle 1 of the continuous inorganic filaments in the suspension 3 is desirously utilized as shown in the drawing.

In order to uniformly suspend the filler in a treating bath 4, the suspension 3 can be stirred by a magnetic stirrer 13 upon rotating a stirrer piece 14 as shown in Figure 1.

When a sizing agent is not applied to the bundle 1 of the continuous inorganic filaments, said bundle 1 can directly be supplied to the treating bath 4 as shown in Figure 1.

When a sizing agent is applied to the bundle 1 of the continuous inorganic filaments, it is advisable that said bundle 1 is passed through an electric oven 15 to decompose and remove the sizing agent in order to uniformly adhere the filler to the surface of the continuous inorganic filaments.

The bundle 1 of the continuous inorganic filaments is led to pulleys 5, 6, 7 and 8 and passed through the treating bath 4 accomodating the suspension 3 of the filler containing the coupling agent dissolved therein.

The soaking treatment can be conducted by using a plurality of treating baths. For example, the first treating bath accomodates the solution of the coupling agent and the second treating bath accomodates the suspension of the filler; the soaking treatment can be carried out by soaking the bundle 1 of the continuous inorganic filaments in the first and second treating baths in sequence.

In a process for producing hybrid fibers, there may be employed, other than the above suspension-soaking method, a method in which the suspension of the filler containing the coupling agent dissolved therein is sprayed onto said bundle 1 or a process in which first the solution of the coupling agent and then the suspension of the filler are sprayed onto said bundle 1.

From the bundle 1 of the continuous inorganic filaments having the filler adhered thereto, which has been passed through the treating bath 4, the medium is removed by evaporation either after pressing said bundle 1 through pressure rollers 9, 10 to squeeze the medium as shown in Figure 1, or by passing said bundle 1 directly through a drying oven 11 as shown in Figure 2.

A process for producing FRM by using the thus obtained hybrid fibers is not particularly limited. However, a process by a high-pressure casting method and a process by a diffusion contacting method using a prepreg sheet formed by spray coating can preferably be employed to produce FRM having excellent mechanical properties.

This invention can prevent fluffing of fibers, contamination of the working environment by scattering adhered matters, etc. in producing hybrid fibers for use in composite materials by adhering the filler composed of metals, carbon or ceramics to the filaments, and markedly improve operability.

Further, as the hybrid fibers obtained in this invention are not fluffed when unwound from the bobbin and passed through the rollers, they can be formed into a preform for FRM with good efficiency.

Still further, when the hybrid fibers obtained in this invention are used in producing FRM by the liquid phase method such as the high-pressure casting method, etc., FRM in which the reinforcing fibers are uniformly dispersed in the matrix can be obtained.

The following Examples illustrate this invention more specifically.

Example 1

A carbon silicate powder (120 g) having an average particle size of 0.2 micrometer was charged in a treating vessel accomodating 2,000 ml of an ethyl alcohol solution containing 0.05 % by weight of γ-aminopropyltriethoxysilane and suspended therein with stirring. Subsequently, polyethylene oxide was dissolved as a binder in the suspension such that the concentration became 0.3 % by weight.

In this Example, hybrid fibers were prepared in the following manner using a device shown in Figure 1.

While a bundle 1 of 800 Si-Ti-C-O filaments (TYRANNO FIBER: a registered trademark for a product of Ube Industries, Ltd.) having a diameter of 9 to 10 micrometers and a tensile strength of 314 kg/mm² was unwound from a bobbin 2, it was passed through the suspension at a rate of 3 m/min with soaking.

The bundle 1 was soaked in a treating bath 4 by pulleys 5, 6, 7 and 8, then pressed between pressure rollers 9, 10, passed through a drying oven 11 and wound again on a bobbin 12. Fluffing was not observed in the bundle 1 leaving the drying oven 11, the filler was not scattered in the ambient atmosphere, and the bundle 1 leaving the bobbin 12 could smoothly be unwound. The amount of the silicon carbide powder adhered to the continuous inorganic filaments was 6 parts by weight per 100 parts by weight of the continuous inorganic filaments. The total amount of the coupling agent adhered to the continuous inorganic filaments and the silicon carbide powder constituting the hybrid fibers was 0.4 part by weight per 100 parts by weight in total of the continuous inorganic filaments and the silicon carbide powder adhered thereto.

Example 2

One hundred grams of commercial flaky carbon was charged in a treating vessel accomodating 2,000 ml of an ethanol solution containing 0.05 % by weight of γ-aminopropyltriethoxysilane, and suspended therein with stirring. Subsequently, polyethylene oxide was dissolved as a binder in the suspension such that its concentration became 0.3 % by weight.

In this Example, hybrid fibers were prepared as follows using a device shown in Figure 2.

A bundle 1 of 800 Si-Ti-C-O filaments (TYRANNO FIBER: a registered trademark for a product of UBE industries, Ltd.) having a diameter of 9 to 10 micrometers and a tensile strength of 314 kg/mm² was delivered from the bobbin 2 and passed through an electric oven 15 kept at 500° C to remove the sizing agent. Then, while leading the bundle 1 via the pulleys 5, 6, 7 and 8, said bundle 1 was passed through the suspension 3 stored in the treating bath 4 at a rate of 3 m/min with soaking to adhere carbon to the surface of the filaments. Said bundle was then passed through the drying oven 11 to dry it and the dried bundle was wound up on the bobbin 12. Fluffing was not observed in the resulting bundle, the filler was not scattered in the ambient atmosphere, and the bundle leaving the bobbin 12 could smoothly be unwound. The amount of the flaky carbon adhered to the continuous inorganic filaments was 2 parts by weight per 100 parts by weight of the continuous inorganic filaments. The total amount of the coupling agent adhered to the continuous inorganic filaments and the flaky carbon constituting the hybrid fibers was 0.4 part by weight per 100 parts in total of the continuous inorganic filaments and the flaky carbon adhered thereto.

Example 3

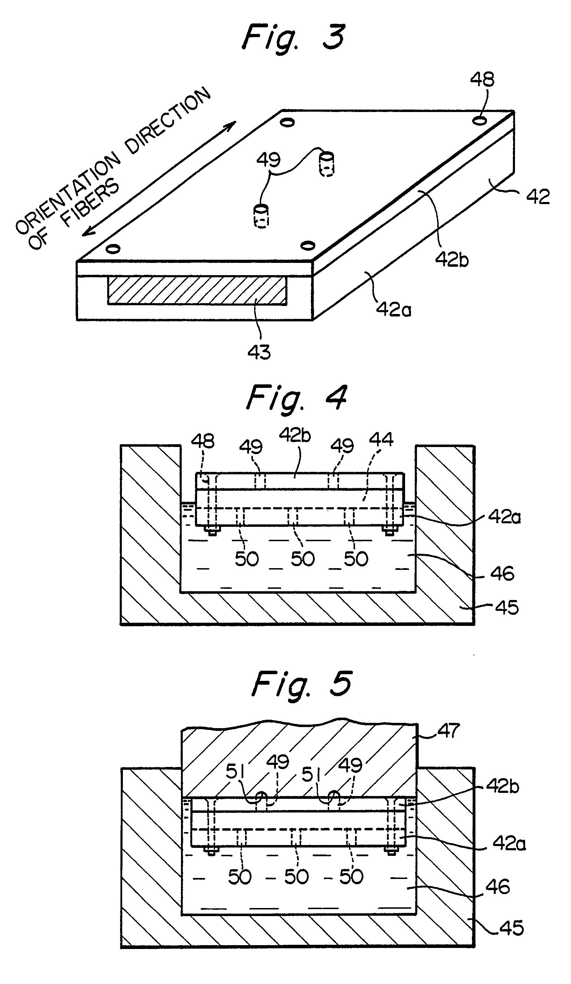

FRM was prepared from the hybrid fibers obtained in Example 1 using a shape retaining jig 42 shown in Figure 3 in the following manner. The jig 42 is made of graphite and comprises a body 42a and a lid 42b. The body 42a has a groove 43 having a length of 15 cm, a width of 8 cm and a depth of 1 cm and penetrating in the longitudinal direction.

The hybrid fibers unwound from the bobbin 12 and cut to a given length were uniformly filled in the groove 43 such that the volume of the fibers became 55 %, and the lid 42b was secured to the body 42 with a bolt and a nut. The graphite shape retaining jig 42 storing the hybrid fibers 44 was heated at 650°C in the ambient atmosphere. As shown in Figure 4, after molten aluminum 46 (JIS 1070) of 750°C was poured in a die 45, the shape retaining jig 42 was placed in the die with the lid 42 b having degassing holes 49 up. Subsequently, as shown in Figure 5, the molten aluminum 46 was pressured at 1,000 $kg/cm^2$ by a plunger 47, and forced into the shape retaining jig from openings on both sides and aluminum injection holes 50 properly formed in the under surface of the body 42a, and coagulated to produce a fiber reinforced metal.

When gas exhaust grooves 51 are formed horizontally in the under surface of the plunger opposite to the degassing holes 47 of the shape retaining jig 42 as shown in Figure 5, exhaust of the gas become even better.

The composite material was withdrawn and the tissue of its cross-section was observed.

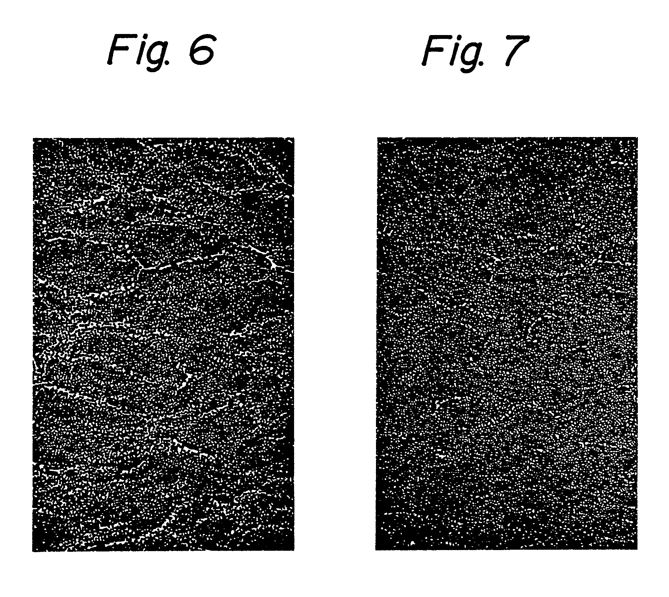

In a micrograph in Figure 6, a black spot is a reinforcing fiber. This micrograph shows that the reinforcing fibers are uniformly dispersed throughout FRM according to this invention and channeling does not occur.

Example 4

FRM was prepared in the same way as in Example 3 except that the hybrid fibers obtained in Example 2 was used instead of the hybrid fibers obtained in Example 1 and uniformly filled such that the fiber volume became 65 %.

The thus obtained composite material was withdrawn and the tissue of its cross-section was observed.

In a micrograph in Figure 7, a black spot is a reinforcing fiber. This micrograph shows that the reinforcing fibers are uniformly dispersed throughout FRM according to this invention and channeling does not occur.

Comparative Example 1

Hybrid fibers were prepared in the same way as in Example 1 except that the silane coupling agent was not added to the suspension 3.

The resulting hybrid fibers were fluffed and entangled with one another. The fiber bundle leaving the bobbin 12 was hardly unwound.

Comparative Example 2

Hybrid fibers were prepared in the same way as in Example 1 except that the silane coupling agent was not added to the suspension 3 and the concentration of polyethylene oxide in the suspension 3 was 0.6 % by weight. The resulting hybrid fibers were fluffed and entangled with one another. The bundle leaving the bobbin 12 could not smoothly be unwound.

Comparative Example 3

Using the hybrid fibers obtained in Comparative Example 2, a fiber reinforced metal was produced in the same way as in Example 3.

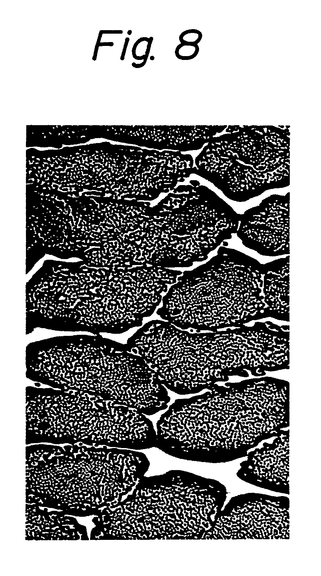

From Figure 8, it follows that the distribution of the reinforcing fibers is non-uniform and channeling also occurs.

## Claims

1. A hybrid fiber comprising a bundle of heat-resistant continuous inorganic filaments and heat-resistant inorganic filler in the form of a short fiber, a whisker or a powder supported on the surface of each filament, which is characterized in that at least one of the filaments and the filler is coated with a coupling agent.

2. A hybrid fiber according to claim 1 in which the coupling agent is present in an amount of 0.05 to 10.0 % by weight based on the total weight of the filaments and filler.

3. A hybrid fiber according to claim 1 or 2 in which the coupling agent is at least one of vinyltriethoxysilane, γ-methacryloxypropyltrimethoxysilane, β-(3,4-epoxycyclohexyl)ethyltrimethoxysilane, γ-glycidoxypropyltrimethoxysilane, γ-aminopropyltriethoxysilane, N-β-aminoethyl-γ-aminopropyltrimethoxysilane, bis(β-hydroxyethyl)-γ-aminopropyltriethoxysilane, γ-chloropropyltrimethoxysilane, γ-chloroisobutyltriethoxysilane, β-cyclohexylethyltrimethoxysilane, phenyltrimethoxysilane, amyltrimethoxysilane, vinyltrimethoxysilane, methacylato chromic chloride and tristearatotitanium isopropylate.

4. A hybrid fiber according to claim 1 or 2 in which the coupling agent is -aminopropyltriethoxysilane.

5. A process for making hybrid fibers as claimed in any one of the preceding claims which comprises soaking a bundle of heat-resistant continuous inorganic filaments in a suspension of a heat-resistant inorganic filler, and drying the soaked filament bundle, wherein at least one of said bundle of filaments and the filler is previously coated with a coupling agent.

6. A process according to claim 5 in which the coupling agent is present in the form of a film coated on the filaments and/or the filler in an amount of 0.05 to 10% by weight based on the total weight fo the filaments and filler.

7. A process for making hybrid fibers as claimed in any one of claims 1 to 4 which comprises soaking a bundle of heat-resistant continuous inorganic filaments in a suspension of a heat-resistant inorganic filler and drying the soaked filament bundle, wherein the suspension of the filler contains a coupling agent dissolved or dispersed therein.

8. Fiber reinforced metals in which hybrid fibers as claimed in any one of claims 1 to 4 are employed as fibrous reinforcement for metallic matrices.

9. Fiber reinforced metals according to claim 8 in which the hybrid fibers have been spread and separated or extracted before being combined with the metallic matrices to ensure uniform distribution in the metallic matrices.

# Fig. 1

# Fig. 2

*Fig. 3*

ORIENTATION DIRECTION OF FIBERS

48

49

42

42b

42a

43

*Fig. 4*

48  49  42b  49  44

50  50  50

42a

46

45

*Fig. 5*

47

51  49  51  49

42b

42a

50  50  50

46

45

Fig. 6

Fig. 7

## Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-3 617 055 (TOYOTA)<br>* Claims 1,7,27-29 * & JP-A-61 266 666;<br>& JP-A-61 295 346 (Cat. D)<br>--- | 1-9 | C 04 B 41/45 //<br>C 04 B 41/51<br>C 22 C 1/09 |
| Y | CHEMICAL ABSTRACTS, vol. 90, no. 22,<br>28th May 1979, page 50, abstract no.<br>169661k, Columbus, Ohio, US; & JP-A-54<br>01 337 (TOKUYAMA SODA CO., LTD)<br>23-01-1979<br>* Abstract *<br>--- | 1-9 | |
| A | PATENT ABSTRACTS OF JAPAN, vol. 5, no.<br>148 (C-072), 18th September 1981; &<br>JP-A-56 079 169 (UBE IND. LTD)<br>29-06-1981<br>--- | 1-9 | |
| A | PATENT ABSTRACTS OF JAPAN, vol. 11, no.<br>290 (C-447), 18th September 1987; &<br>JP-A-62 083 439 (TOKAI CARBON CO.)<br>16-04-1987<br>--- | 1-9 | |
| A | EP-A-0 256 828 (UBE IND.)<br>* Claims 1,7 *<br>----- | 1 | TECHNICAL FIELDS SEARCHED (Int. Cl.5)<br><br>C 04 B<br>C 22 C |

The present search report has been drawn up for all claims

| Place of search | Date of completion of the search | Examiner |
|---|---|---|
| THE HAGUE | 22-06-1990 | SCHRUERS H.J. |